# EUROPÄISCHE PATENTANMELDUNG

(11) **EP 2 461 119 A2**
(43) Veröffentlichungstag der Anmeldung: **06.06.2012**
(21) Anmeldenummer: 11188538.0
(22) Anmeldetag: 10.11.2011
(51) Int. Cl.: F24J 2/52, H01L 31/042

(54) **Klemme für ein Plattenelement, insbesondere für ein Photovoltaikmodul**

(30) Priorität: 03.12.2010 DE 102010062384
(71) Anmelder: HILTI Aktiengesellschaft, 9494 Schaan (LI)
(72) Erfinder: Kemple, Lorcan, 6971 Hard (AT); Beck, Georg, 9492 Eschen (LI)

(57) **Zusammenfassung**

Die Erfindung betrifft eine Klemme für zumindest ein Plattenelement, mit einem ersten Klemmenteil (1) und einem zweiten Klemmenteil (2), wobei die Klemmenteile relativ zueinander zwischen einer offenen Position und einer Klemmposition für das Plattenelement verstellbar sind, und zumindest einem Elastomerprofil (10), welches zwischen den beiden Klemmenteilen angeordnet ist, und welches einen im Querschnitt U-förmigen Bereich zum Umgreifen des Plattenelementes aufweist. Erfindungsgemäss ist vorgesehen, dass das Elastomerprofil einen Klemmabschnitt (14) aufweist, der zwischen den beiden Klemmenteilen eingeklemmt wird, wenn sich die Klemmenteile in der Klemmposition befinden.

## Beschreibung

Die Erfindung betrifft eine Klemme für zumindest ein Plattenelement, insbesondere für zumindest ein Photovoltaikmodul, vorzugsweise ein Dünnschicht-Photovoltaikmodul, gemäss dem Oberbegriff des Anspruchs 1. Eine gattungsgemässe Klemme ist ausgebildet mit einem ersten Klemmenteil und einem zweiten Klemmenteil, wobei die Klemmenteile relativ zueinander zwischen einer offenen Position und einer Klemmposition für das Plattenelement verstellbar sind, und zumindest einem Elastomerprofil, welches zur Anlage am Plattenelement zwischen den beiden Klemmenteilen angeordnet ist.

Eine gattungsgemässe Klemme für Photovoltaikmodule geht aus der WO 2009/086150 A1 hervor. Weitere Klemmen für Photovoltaikmodule sind aus der EP 2 090 847 A2, der DE 20 2009 012 870 U1 und der DE 20 2009 014 048 U1 bekannt.

Es sind Klemmen für Photovoltaikmodule bekannt, bei denen das Photovoltaikmodul zwischen Elastomerelementen eingelegt wird, und die Elastomerelemente dann durch zwei Klemmenteile mit dem Photovoltaikmodul verpresst werden, wodurch das Photovoltaikmodul an den Klemmenteilen festgelegt wird.

Es hat sich jedoch gezeigt, dass bestimmte Klemmen nach dem Stand der Technik unter Umständen ein unzureichendes Langzeit-Klemmverhalten aufweisen können.

Aufgabe der Erfindung ist es, eine besonders zuverlässige, insbesondere im Langzeitbetrieb zuverlässige Klemme anzugeben.

Die Aufgabe wird erfindungsgemäss durch eine Klemme mit den Merkmalen des Anspruchs 1 gelöst. Bevorzugte Ausführungsformen sind in den abhängigen Ansprüchen angegeben.

Eine erfindungsgemässe Klemme ist dadurch gekennzeichnet, dass das Elastomerprofil einen Klemmabschnitt aufweist, der, insbesondere zum Festlegen des Elastomerprofils an den Klemmenteilen, zwischen den beiden Klemmenteilen eingeklemmt wird, wenn sich die Klemmenteile in der Klemmposition befinden. Das besagte Festlegen des Elastomerprofils an den Klemmenteilen kann insbesondere ein zumindest teilweise kraftschlüssiges Festlegen sein.

Ein Grundgedanke der Erfindung liegt darin, dass das Elastomerprofil einen Klemmabschnitt aufweist, der unmittelbar (d.h. nicht über das Plattenelement) von den beiden Klemmenteilen eingeklemmt wird, wenn sich die beiden Klemmenteile in der Klemmposition befinden. Durch diese Verklemmung wird das Elastomerprofil mechanisch an den Klemmenteilen gesichert, so dass eine unerwünschte Verschiebung des Elastomerprofils relativ zu den Klemmenteilen, beispielsweise aufgrund unterschiedlicher thermischer Ausdehnung des Photovoltaikmoduls und seiner Tragestruktur, unterbunden wird. Eine Klebeverbindung, die eventuell alterungsanfällig sein kann und damit unter Umständen ein unzureichendes Langzeitverhalten aufweist, ist dabei nicht erforderlich.

Die Geometrie der erfindungsgemässen Klemme beinhaltet, dass der Monteur das Elastomerprofil zwischen den beiden vorzugsweise metallischen Klemmenteilen verklemmt, wenn er die Klemme festzieht, d.h. wenn er die Klemmenteile in die Klemmposition verbringt. Hierdurch wird das Risiko, dass das Elastomerprofil während der Lebensdauer der Installation aufgrund dynamischer Effekte herausfällt, deutlich reduziert.

Erfindungsgemäss wird unter der offenen Position eine Position verstanden, bei der das Plattenelement freigegeben ist, und/oder unter der Klemmposition eine Position, bei der die Klemme das Plattenelement hält.

Die Klemmenteile sind geeigneterweise Metallteile, insbesondere Aluminiumteile. Es können aber auch Klemmenteile aus Kunststoff vorgesehen sein. Bei den Klemmenteilen kann es sich insbesondere um Strangpressprofile handeln.

Besonders bevorzugt ist es, dass das Elastomerprofil einen im Querschnitt U-förmigen Bereich zum Umgreifen des Plattenelementes aufweist. Gemäss dieser Ausführungsform ist das oberseitig am Plattenelement anliegende Elastomerelement einstückig mit dem unterseitig am Plattenelement anliegenden Elastomerelement ausgebildet. Somit kann über den Klemmabschnitt, der sich vorzugsweise an den U-förmigen Bereich anschliesst, sowohl das oberseitig am Plattenelement anliegende Elastomerelement als auch das unterseitig am Plattenelement anliegende Elastomerelement gesichert werden. Zusätzliche Klebeverbindungen sind somit entbehrlich. Insbesondere ist es erfindungsgemäss, dass zwischen dem

Elastomerprofil und den Klemmenteilen keine stoffschlüssige Verbindung, insbesondere keine Verklebung besteht, wodurch der Herstellungsaufwand weiter reduziert ist.

Darüber hinaus ist es zweckmässig, dass das erste Klemmenteil einen Steg aufweist, der vom ersten Klemmenteil zum zweiten Klemmenteil hin vorsteht, und der den Klemmabschnitt klemmt, wenn sich die Klemmenteile in der Klemmposition befinden. Ein solcher Steg erlaubt es, eine besonders kleine Kontaktfläche mit dem Elastomerprofil und somit eine besonders gute Klemmwirkung zu realisieren. Aus analogen Erwägungen kann zusätzlich oder alternativ vorgesehen sein, dass das zweite Klemmenteil einen Steg aufweist, der vom zweiten Klemmenteil zum ersten Klemmenteil hin vorsteht, und der den Klemmabschnitt klemmt wenn sich die Klemmenteile in der Klemmposition befinden. Sofern zwei Stege vorgesehen sind, liegen diese Stege geeigneterweise übereinander, so dass die Stege das Elastomerprofil ähnlich den Backen einer Kneifzange bekneifen, wenn die beiden Klemmenteile in vertikaler Richtung zueinander verstellt und in die Klemmposition gebracht werden.

Geeigneterweise weist das Elastomerprofil einen im Querschnitt T-förmigen Bereich auf. Ein solcher T-förmiger Bereich erlaubt es, eine formschlüssige Verbindung zwischen dem Elastomerprofil und den Klemmenteilen zu bilden, welche das Elastomerprofil zusätzlich sichert. Bevorzugt ist es, dass sich zumindest ein Teil des Klemmabschnitts am T-förmigen Bereich, insbesondere am Mittelschenkel des T-förmigen Bereichs befindet, wodurch eine besonders kompakte Anordnung erhalten wird.

Darüber hinaus liegt eine bevorzugte Ausführungsform darin, dass die beiden Klemmenteile mit den beiden Stegen eine Einlegenut bilden, in die der im Querschnitt T-förmige Bereich des Elastomerprofils aufgenommen ist. Gemäss dieser Ausführungsform dienen die Stege nicht nur zum Klemmen des Elastomerprofils, sondern auch zum formschlüssigen Halten des T-förmigen Bereichs des Elastomerprofils, so dass die Baugrösse der Klemme weiter verringert werden kann.

Eine weitere bevorzugte Ausgestaltung der Erfindung liegt darin, dass das Elastomerprofil im Bereich des Klemmabschnitts und/oder im Mittelschenkel des T-förmigen Bereichs zumindest ein Loch aufweist. Ein solches Loch kann beim Verklemmen des Klemmabschnitts auftretende Deformationen aufnehmen und für eine besonders gut definierte Verformungen sorgen. Das zumindest eine Loch kann insbesondere längs des zumindest einen Steges verlaufen, was unter anderem im Hinblick auf den Herstellungsaufwand vorteilhaft sein kann.

Weiterhin kann nach der Erfindung vorgesehen sein, dass am ersten Klemmenteil zumindest ein Vorsprung angeordnet ist, der, insbesondere in vertikaler Richtung, zum zweiten Klemmenteil hin weist, der eine, insbesondere vertikale, Bewegung des zweiten Klemmenteils zum ersten Klemmenteil hin begrenzt, und der in der Klemmposition am zweiten Klemmenteil anliegt. Ein solcher Vorsprung bildet einerseits einen Anschlag, der den Klemmvorgang begrenzt und somit das Plattenelement vor Überlastung schützt. Anderseits definiert der Vorsprung die Klemmposition, so dass eine besonders zuverlässige Montage gegeben ist.

Eine weitere vorteilhafte Ausgestaltung der Erfindung liegt darin, dass das Elastomerprofil eine Federlippe aufweist, welche vorzugsweise am im Querschnitt U-förmigen Bereich angeordnet ist, und welche vorzugsweise die Klemmenteile vorspannt und/oder in der offenen Position hält. Da die Federlippe die Klemmenteile offen hält, ist eine besonders einfache Montage der Klemme möglich. Die Federlippe ist zweckmässigerweise einstückig mit dem Elastomerprofil ausgebildet, so dass besonders ein besonders geringer Herstellungsaufwand gegeben ist.

Weiterhin ist es bevorzugt, dass durch die beiden Klemmenteile eine Schraube hindurchgeführt ist, die mit einer Schienenmutter zum Festlegen der Klemme an einer Schiene, insbesondere an einer C-Profilschiene, gekontert ist. Gemäss dieser Ausführungsform können durch Festziehen der Schraube sowohl die beiden Klemmenteile aus der offenen Position in die Klemmposition gebracht werden als auch die Klemme an einer Profilschiene festgelegt werden, was eine besonders schnelle Montage ermöglicht. Darüber hinaus kann die Federlippe die Schienenmutter gegenüber dem der Schienenmutter benachbarten Klemmenteil vorspannen. Hierdurch wird eine vorläufige Montageposition zur Verfügung gestellt, in welcher die Klemme an der Schiene durch die von der Federlippe aufgebrachte Vorspannung vorläufig hält, so dass die Klemme vom Monteur nicht mehr festgehalten werden muss. Bei der Montage positioniert der Monteur also die Klemme so an der Schiene, dass sich die Schienenmutter im Kanal der Schiene befindet und dreht sodann die Schienenmutter um 90°, so dass sie quer zum Kanal verläuft. Die von der Federlippe über die Schraube auf die Schienenmutter aufgebrachte Vorspannung hält die Klemme vorläufig an der Schiene, so dass der Monteur die Klemme nun loslassen kann und das Plattenelement mit beiden Händen in die Klemme einführen kann. Durch Festziehen der Schraube kann der Monteur sodann sowohl das Plattenelement an der Klemme sichern als auch die Klemme endgültig an der Schiene sichern.

Die Erfindung wird nachfolgend anhand bevorzugter Ausführungsbeispiele näher erläutert, die schematisch in den beiliegenden Figuren dargestellt sind. In den Figuren zeigen:
- Figur 1:: eine perspektivische Darstellung einer ersten Ausführungsform einer erfindungsgemässen Klemme in der offenen Position;
- Figur 2:: eine perspektivische Darstellung der Ausführungsform aus Fig. 1 in der Klemmposition;
- Figur 3:: eine perspektivische Darstellung der Ausführungsform aus Fig. 1 in der Klemmposition von schräg unten;
- Figur 4:: eine perspektivische Darstellung einer zweiten Ausführungsform einer erfindungsgemässen Klemme in der offenen Position; und
- Figur 5:: eine schematische Querschnittsansicht einer erfindungsgemässen Klemme an einer C-Profilschiene.

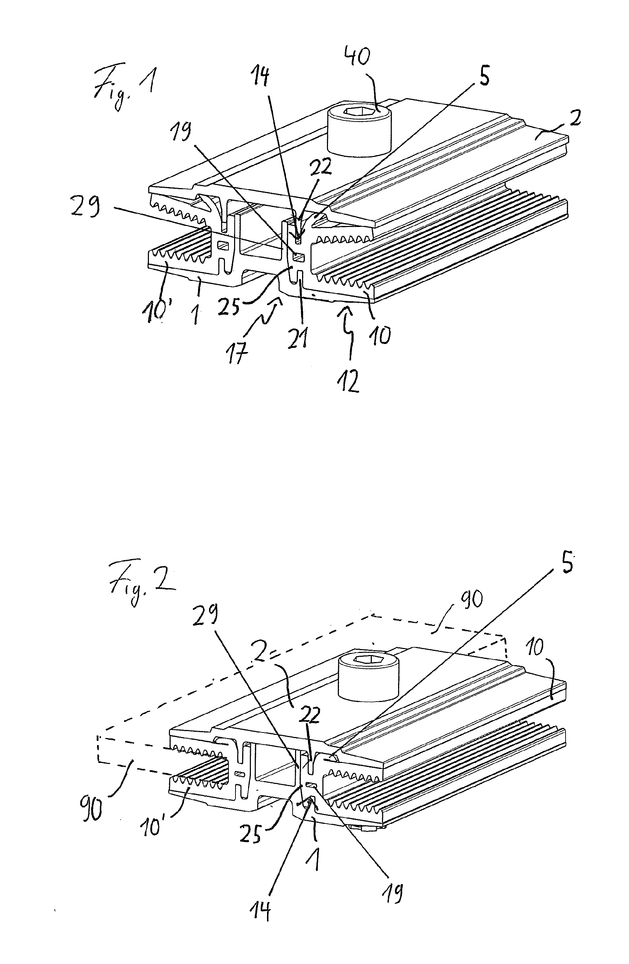

Ein erstes Ausführungsbeispiel einer erfindungsgemässen Klemme ist in den Figuren 1 bis 3 dargestellt. Das Ausführungsbeispiel der Figuren 1 und 2 ist als Mittelklemme zum Fixieren von zwei Plattenelementen ausgebildet und weist demgemäss zwei Elastomerprofile 10, 10' zur Aufnahme jeweils eines Plattenelementes auf. Der Übersichtlichkeit halber ist ein solches Plattenelement 90 nur in Figur 2 und dort auch nur im zweiten Elastomerprofil 10' dargestellt.

Die Klemme der Figur 1 ist im Wesentlichen spiegelsymmetrisch ausgebildet. Daher wird im Folgenden nur das in den Figuren rechts dargestellte Elastomerprofil 10 und dessen Anordnung im Detail beschrieben. Das zweite Elastomerprofil 10' ist analog ausgebildet und angeordnet.

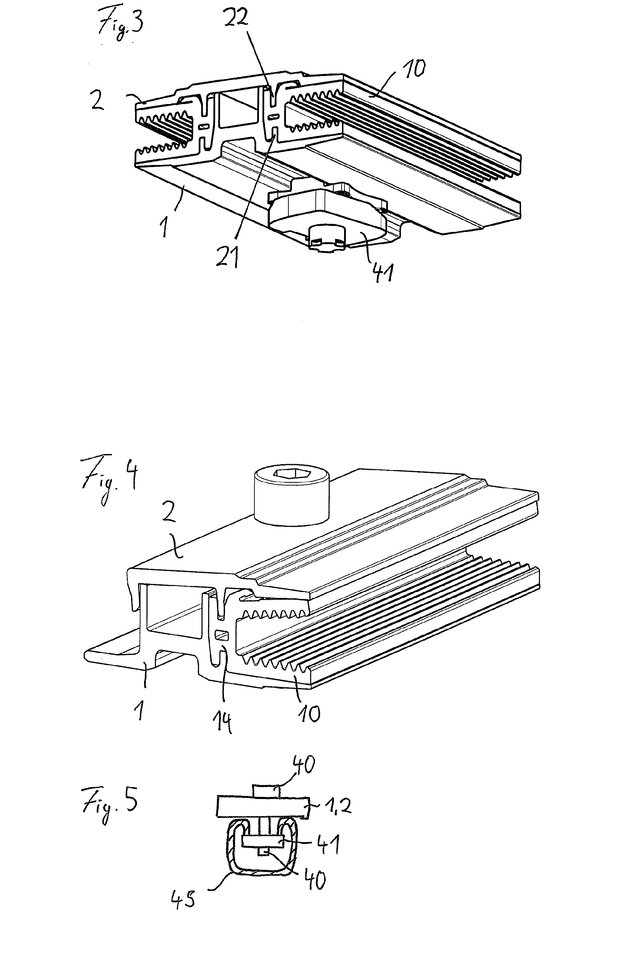

Die dargestellte Klemme weist ein erstes Klemmenteil 1 und ein zweites Klemmenteil 2 auf, die in vertikaler Richtung zueinander verschiebbar sind. Durch die beiden Klemmenteile 1 und 2 läuft in vertikaler Richtung eine Schraube 40 hindurch, die zum Verspannen der beiden Klemmenteile 1 und 2 dient. Der Kopf der Schraube 40 liegt am zweiten Klemmenteil 2 an. An ihrem Schaft ist die Schraube mit einer Schienenmutter 41 (Fig. 3) gekontert, die benachbart zum ersten Klemmenteil 1 angeordnet ist. Wie in Figur 5 schematisch dargestellt ist, dient die Schienenmutter 41 zum formschlüssigen Festlegen der beiden Klemmenteile 1 und 2 an einer C-Profilschiene 45.

Durch Festziehen der Schraube 40 können die beiden Klemmenteile 1, 2 relativ zueinander aus einer offenen Position, die in Fig. 1 dargestellt ist, und in der die Plattenelemente 90 freigegeben sind, in eine Klemmposition verschoben werden, die in Fig. 2 dargestellt ist, und in der die Plattenelemente 90 in den Elastomerprofilen 10, 10' festgelegt sind. Gleichzeitig kann durch Festziehen der Schraube 40 die Schienenmutter in der C-Profilschiene 45 festgelegt werden.

Am ersten Klemmenteil 1 sind zwei stegförmige Vorsprünge 29 vorgesehen, die sich in vertikaler Richtung parallel zur Schraube 40 zum zweiten Klemmenteil 2 hin erstrecken und einen Anschlag für das zweite Klemmenteil 2 bilden. In der Klemmposition (Fig. 2) liegen die beiden Vorsprünge 29 am zweiten Klemmenteil 2 an, währen sie in der offenen Position (Fig. 1) vom zweiten Klemmenteil 2 beabstandet sind.

Das Elastomerprofil 10 (sowie auch das symmetrisch aufgebaute Elastomerprofil 10') weist einen im Querschnitt U-förmigen Bereich 12 auf, der zum Einlegen eines Plattenelementes 90 dient. Im Bereich der Seitenschenkel des U-förmigen Bereiches 12 ist das Elastomerprofil 10 mit einer Wellenstruktur versehen, die eine Kontaktfläche für das Plattenelement 90 bildet. Darüber hinaus weist das Elastomerprofil 10 einen im Querschnitt T-förmigen Bereich 17 auf. Dieser T-förmige Bereich 17 schliesst sich an seinem Mittelschenkel an den Mittelschenkel des U-förmigen Bereichs 12 an.

Der Kopf des T-förmigen Bereichs 17 ist in einer Einlegenut 25 aufgenommen, die einerseits vom stegförmigen Vorsprung 29 und andererseits von einem am Klemmenteil 1 angeordneten ersten Steg 21 sowie von einem am Klemmenteil 2 angeordneten zweiten Steg 22 begrenzt wird. Durch die Aufnahme des T-förmigen Bereichs 17 in der Einlegenut 25 ist das Elastomerprofil 10 formschlüssig gegen ein seitliches Herausrutschen gesichert.

Die Stege 21 und 22 sind vertikal übereinander angeordnet. In der in Fig. 2 dargestellten Klemmposition klemmen die beiden Stege 21 und 22 das Elastomerprofil 10 in einem Klemmabschnitt 14 ein, der am Mittelschenkel des T-förmigen 17 Bereiches ausgebildet ist. Durch dieses Einklemmen des Klemmabschnitts 14 wird das Elastomerprofil 10 gegen ein Verrutschen in Längsrichtung der Stege 21 und 22 und somit in Längsrichtung der Klemmenteile 1 und 2 gesichert. Befinden sich die Klemmenteile 1, 2 hingegen in der in Fig. 1 dargestellten offenen Position, so ist zumindest eines der Klemmenteile 1, 2, insbesondere zumindest einer der Stege 21, 22, vom Klemmabschnitt 14 beabstandet (im dargestellten Ausführungsbeispiel ist der obere Steg 22 beabstandet). Das Elastomerprofil 10 ist damit freigegeben und kann zu Montagezwecken längs der Stege 21, 22 verschoben werden.

Das Elastomerprofil weist im Klemmabschnitt 14, also im Mittelschenkel des T-förmigen Bereichs 17, ein Loch 19 auf, welches sich längs der beiden Stege 21, 22 erstreckt. Dieses Loch 19, welches zwischen den beiden Stegen 21 und 22 angeordnet ist, kann zumindest einen Teil der Deformationen aufnehmen, die auftreten, wenn das Elastomerprofil 10 in der Klemmposition durch die beiden Klemmteile 1, 2 eingeklemmt wird, und kann somit unerwünschte Deformationen des Elastomerprofils 10 zumindest reduzieren.

Die beiden Klemmenteile 1 und 2 weisen jeweils horizontal verlaufende Flügelbereiche auf, zwischen denen die beiden Elastomerprofile 10 und 10' angeordnet sind.

An seiner dem zweiten Klemmenteil 2 zugewandten Seite weist das Elastomerprofil 10 eine vorzugsweise benachbart zum Steg 22 angeordnete und/oder längs des Steges 22 verlaufende Federlippe 5 auf, die sich am zweiten Klemmenteil 2 abstützt. Diese Federlippe 5, die am Übergang vom Mittelschenkel zum Seitenschenkel des U-förmigen Bereichs 12 angeordnet ist, drückt das zweiten Klemmenteil 2 vom U-förmigen Bereich 12 des Elastomerprofils 10 und damit vom ersten Klemmenteil 1 ab. Durch die Aktion der Federlippe 5 werden zum einen die Klemmenteile 1 und 2 in der offenen Position gehalten solange die Schraube 40 nicht angezogen ist. Zum anderen spannt die Federlippe 5 über die Schraube 40 die Schienenmutter 41 am ersten Klemmenteil 1 vor, so dass die Schienenmutter 41 in der C-Profilschiene 45 vorläufig festgelegt werden kann und eine vorläufige Haltewirkung hat, bevor die Schraube 40 angezogen wird.

Ein weiteres Ausführungsbeispiel einer erfindungsgemässen Klemme ist in Fig. 4 dargestellt. Die in Fig. 4 dargestellte Ausführungsform unterscheidet sich von der Ausführungsform der Figuren 1 bis 3 dadurch, dass gemäss Fig. 4 anstatt zweier Elastomerprofile 10 und 10' lediglich ein einziges Elastomerprofil 10 vorgesehen ist. Demgemäss handelt es sich bei der Ausführungsform der Fig. 4 um eine Randklemme, die zum Festlegen eines einzelnen Plattenelementes vorgesehen ist, wohingegen die Ausführungsform der Figuren 1 bis 3 eine Mittelklemme ist, welche zwei Plattenelemente hält.

## Patentansprüche

1. Klemme für zumindest ein Plattenelement (90), mit
einem ersten Klemmenteil (1) und einem zweiten Klemmenteil (2), wobei die Klemmenteile (1, 2) relativ zueinander zwischen einer offenen Position und einer Klemmposition für das Plattenelement (90) verstellbar sind, und
zumindest einem Elastomerprofil (10), welches zur Anlage am Plattenelement (90) zwischen den beiden Klemmenteilen (1, 2) angeordnet ist,
**dadurch gekennzeichnet,**
**dass** das Elastomerprofil (10) einen Klemmabschnitt (14) aufweist, der zwischen den beiden Klemmenteilen (1, 2) eingeklemmt wird, wenn sich die Klemmenteile (1, 2) in der Klemmposition befinden.

2. Klemme nach Anspruch 1,
**dadurch gekennzeichnet,**
**dass** das Elastomerprofil (10) einen im Querschnitt U-förmigen Bereich (12) zum Umgreifen des Plattenelementes (90) aufweist.

3. Klemme nach einem der vorstehenden Ansprüche,
**dadurch gekennzeichnet,**
**dass** das erste Klemmenteil (1) einen Steg (21) aufweist, der vom ersten Klemmenteil (1) zum zweiten Klemmenteil (2) hin vorsteht, und der den Klemmabschnitt (14) klemmt, wenn sich die Klemmenteile (1, 2) in der Klemmposition befinden und/oder dass das zweite Klemmenteil (2) einen Steg (22) aufweist, der vom zweiten Klemmenteil (2) zum ersten Klemmenteil (1) hin vorsteht, und der den Klemmabschnitt (14) klemmt wenn sich die Klemmenteile (1, 2) in der Klemmposition befinden.

4. Klemme nach einem der vorstehenden Ansprüche,
**dadurch gekennzeichnet,**
**dass** das Elastomerprofil (10) einen im Querschnitt T-förmigen Bereich (17) aufweist, und dass sich zumindest ein Teil des Klemmabschnitts (14) am Mittelschenkel des T-förmigen Bereichs (17) befindet.

5. Klemme nach Anspruch 3 und 4,
**dadurch gekennzeichnet,**
**dass** die beiden Klemmenteile (1, 2) mit den beiden Stegen (21, 22) eine Einlegenut (25) bilden, in die der im Querschnitt T-förmige Bereich (17) des Elastomerprofils (10) aufgenommen ist.

6. Klemme nach einem der vorstehenden Ansprüche,
**dadurch gekennzeichnet,**
**dass** das Elastomerprofil (10) im Bereich des Klemmabschnitts (14) zumindest ein Loch (19) aufweist.

7. Klemme nach einem der vorstehenden Ansprüche,
**dadurch gekennzeichnet,**
**dass** am ersten Klemmenteil (1) zumindest ein Vorsprung (29) angeordnet ist, der zum zweiten Klemmenteil (2) hin weist, der eine Bewegung des zweiten Klemmenteils (2) zum ersten Klemmenteils (1) hin begrenzt, und der in der Klemmposition am zweiten Klemmenteil (2) anliegt.

8. Klemme nach einem der vorstehenden Ansprüche,
**dadurch gekennzeichnet,**
**dass** das Elastomerprofil (10) eine Federlippe (5) aufweist, welche am im Querschnitt U-förmigen Bereich (12) angeordnet ist, und welche die Klemmenteile (1, 2) vorspannt.

9. Klemme nach einem der vorstehenden Ansprüche,
**dadurch gekennzeichnet,**
**dass** durch die beiden Klemmenteile (1, 2) eine Schraube (40) hindurchgeführt ist, die mit einer Schienenmutter (41) zum Festlegen der Klemme an einer Schiene (45) gekontert ist.
